# EUROPÄISCHE PATENTSCHRIFT

(11) **EP 2 646 266 B1**
(45) Veröffentlichungstag und Bekanntmachung des Hinweises auf die Patenterteilung: **30.08.2017**
(21) Anmeldenummer: 11773204.0
(22) Anmeldetag: 21.10.2011
(51) Int. Cl.: B60G 17/015, B60G 17/016

(54) **VERFAHREN ZUR STEUERUNG DES DRUCKAUSGLEICHS BEI EINEM FAHRWERK MIT EINER ANTRIEBSACHSE UND EINER SCHLEPPACHSE**
METHOD FOR CONTROLLING PRESSURE EQUALIZATION IN RUNNING GEAR HAVING A DRIVE AXLE AND A TRAILING AXLE
PROCÉDÉ DE COMMANDE DE L'ÉQUILIBRAGE DE PRESSION POUR UN TRAIN DE ROULEMENT COMPORTANT UN ESSIEU MOTEUR ET UN ESSIEU TRAÎNÉ

(30) Priorität: 02.12.2010 DE 102010053264
(43) Veröffentlichungstag der Anmeldung: 09.10.2013
(73) Patentinhaber: WABCO GmbH, 30453 Hannover (DE)
(72) Erfinder: GERAMI-MANESCH, Bijan, 31303 Burgdorf (DE); LUCAS, Johann, 31319 Sehnde (DE)
(86) Internationale Anmeldenummer: PCT/EP2011/005316
(87) Internationale Veröffentlichungsnummer: WO 2012/072164

(56) Entgegenhaltungen:
- EP-A2- 0 378 202
- DE-A1- 3 430 454
- DE-A1- 4 327 764
- DE-A1- 19 530 260
- DE-A1-102007 033 527

## Beschreibung

Die Erfindung betrifft ein Verfahren zur Steuerung des Druckausgleichs bei einem Fahrwerk eines Fahrzeuges mit einer Antriebsachse und zumindest einer Schleppachse ohne Antriebsfunktion, wobei den Achsen jeweils eine Druckkammer auf der linken und rechten Fahrzeugseite zugeordnet ist, über die der auf die jeweilige Achse wirkende Druck gesteuert wird.

Bei Fahrzeugen, insbesondere Nutzfahrzeugen, wird in den meisten Fällen die vorderste mehrerer Hinterachsen angetrieben, während die hinteren Achsen als reine Schlepp- oder Liftachsen keine Antriebsfunktion aufweisen.

Beim Anfahren eines derartigen Fahrzeuges kann es zu einem Durchdrehen der Antriebsräder aufgrund mangelnder Haftreibung kommen, da sich während des Anfahrens durch die Bewegung des Fahrzeugaufbaus zwangsläufig eine zusätzliche Belastung der Schleppachse sowie eine Entlastung der Antriebsachse einstellt. Unterschreitet diese Entlastung der Antriebsachse einen bestimmten Schwellenwert, so führt dies zu einem Durchdrehen der Antriebsräder.

Der erforderliche Luftdruck in den Balgfedern der Druckkammern der Achsen jeweils eine ergibt sich aus der Beladungssituation. Die Luftdruckverteilung zwischen der Haupt- und der Zusatzachse erfolgt nach dem Prinzip der Traktionsregelung, wobei für jede der beiden Hinterachsen ein eigener zulässiger Maximalwert des Luftfederdrucks vorgegeben ist, der einem voll ausgeladenen Fahrzeug entspricht. Ziel der Traktionsregelung ist es, bei zunehmender Beladung primär die Antriebsachse zu belasten, und zwar durch Belüften der Luftfederbälge der Antriebsachse bis zum maximal zulässigen Druck unter Einhaltung des Fahrniveaus. Bei weiter zunehmender Beladung wird diese dann von der Zusatzachse aufgenommen, indem die Luftfederbälge der Zusatzachse belüftet werden, wobei der Druck in den Bälgen der Antriebsachse auf dem maximal zulässigen Druck gehalten wird.

Der Druck in den Bälgen der Schleppachse wird dabei auf einen vom Gesetzgeber festgelegten Mindestwert abgesenkt. Eine Relaissteuerung sorgt dafür, dass der dabei zwangsläufig auftretende hohe Druck in den Bälgen der Antriebsachse nur über einen begrenzten Zeitraum entsteht. Nach Erreichen dieser Zeitschwelle schaltet diese Steuerung die Bälge der Schleppachse wieder auf den normalen Arbeitsdruck. Dadurch wird eine Überlastung der Bälge der Antriebsachse - vor allem bei voll beladenem Fahrzeug - vermieden.

Aus der DE 10 2006 011 183 A1 ist ein Verfahren zur Traktionsregelung eines pneumatisch gefederten Fahrzeuges mit einer Antriebsachse und einer Liftachse bekannt. Durch eine Messung der Luftfederdrücke an beiden Fahrzeugseiten der Antriebsachse und der Liftachse wird ermittelt, ob an einer Fahrzeugseite eine Überlast vorliegt, bei der die maximal zulässigen Luftfederdrücke überschritten sind.

Falls aufgrund einer Überladung des Fahrzeugs die maximal zulässigen Balgdrücke an Antriebsachse und Liftachse an mindestens einer Fahrzeugseite überschritten werden, schaltet das System in einen Überlastmodus, in dem nicht mehr die Traktion, sondern ein Druckverhältnis zwischen Antriebs- und Zusatzachse gemäß den zulässigen Balgdrücken an den beiden Achsen ausgeregelt wird.

Um die vorhandene Traktion an der Antriebsachse beim Übergang von der Traktionsregelung zur Druckverhältnisregelung im Überlastmodus zumindest weitgehend zu erhalten, wird die Überlast nicht pauschal für das Gesamtfahrzeug detektiert, sondern bei Erkennen einer Überlast an lediglich einer Fahrzeugseite zunächst nur diese Überlastseite gemäß Druckverhältnisregelung im Überlastmodus geregelt und die andere, leichtere Fahrzeugseite in der Traktionsregelung mit einer Anpassung belassen. Aufgrund der seitenweisen Überlasterkennung wird demnach eine Überlastung vermieden, indem der Druck von der Antriebsachse auf die Schleppachse überführt wird.

Die DE 35 45 222 A1 offenbart bereits eine Vorrichtung zur Teilentlastung der Schleppachse eines luftgefederten Fahrzeuges, die eine differenzierte, der gesamten Fahrzeugbelastung angepasste Steuerung des Drucks in den Bälgen der Schleppachse ermöglicht. Hierzu wird der Druck in den Bälgen der Schleppachse durch den Druck in den Bälgen der Antriebsachse mittels eines bestimmten Druckverhältnisventils gesteuert. Dadurch wird alternativ eine Gleichschaltung entweder der beiden Achsen als ein festes Druckverhältnis zwischen den Achsen oder jeweils der linken und der rechten Fahrzeugseite beider Achsen untereinander als ein festes Druckverhältnis für beide Achsen auf der linken und der rechten Fahrzeugseite vorgeschlagen.

Durch die DE 38 15 612 A1 ist ein Verfahren zur Regelung einer druckluftgestützten Fahrzeugfederung mit mehreren, zwischen mindestens einem Fahrzeugaufbau und mindestens einer Fahrzeugachse angeordneten Luftfederelementen bekannt. Dabei wird mittels einer Steuereinrichtung ein zu hoher Druckunterschied zwischen den Luftfederelementen erkannt und ein Druckausgleichsregelungsvorgang eingeleitet. Hierdurch wird erreicht, dass ein zu hoher Druckunterschied zwischen Luftfederelementen, beispielsweise an einer Fahrzeugachse zwischen den Luftfederelementen der linken und der rechten Fahrzeugseite, behoben werden kann, ohne dass sich das Niveau des Fahrzeugaufbaus und die Verteilung der Last auf die einzelnen Gruppen von Luftfederelementen unzulässig stark verändern. Hierdurch soll eine Abweichung des Drucks in den verschiedenen Luftfederelementen vermieden werden.
Ferner betrifft die DE 38 41 476 A1 eine Niveauregelung einer Fahrzeugfederung für eine rechte und eine linke Fahrzeugseite. Um zu vermeiden, dass beim Absenken des Niveaus eine Fahrzeugseite oberhalb des Niveaus stehen bleibt, weil beispielsweise das Gewicht des Aufbaus nahezu vollständig von dem ersten Luftfederelement getragen wird bzw. von einer anderen Achse übernommen wird, sorgt eine Steuereinrichtung dafür, dass auf der Fahrzeugseite entlüftet wird, auf der das Niveau bereits innerhalb eines Toleranzbandes liegt, um das mittlere Fahrzeugniveau auf einen zulässigen Wert einzustellen.

Die DE4327764A1, die als nächstliegender Stand der Technik betrachtet wird, beschreibt eine Luftfederungsanlage für Fahrzeuge, mit mindestens einem zwischen einer Achse und einem Fahrzeugaufbau des Fahrzeugs angeordneten Luftfederbalg, mit einer Druckluftbeschaffungseinrichtung, mit mindestens einer, mindestens einen mit dem mindestens einen Luftfederbalg verbundenen veränderbaren Ventilquerschnitt überwachende Ventileinrichtung, sowie mit einer die Ventileinrichtung steuernden Steuerung, wobei die Ventileinrichtung mindestens ein gegen einen Ventilsitz betätigbares Ventilglied umfasst, dessen Lage den Ventilquerschnitt bestimmt, und wobei die Lage des Ventilglieds mit Hilfe eines Steuerdrucks steuerbar ist, wobei ein verstellbarer Ventilkörper vorgesehen ist, dessen Stellposition mit Hilfe elektrischer Mittel durch Zuführen elektrischer Energie einstellbar ist und dessen Stellposition den Steuerdruck bestimmt, wobei bei Beenden der Zufuhr der elektrischen Energie die Stellposition des Ventilkörpers erhalten bleibt. Es wird eine seitenweise Regelung des Niveaus der Luftfederbälge der angetriebenen Achse offenbart, wobei das Niveau der Liftachse gemeinsam zentral für den linken und den rechten Luftfederbalg der Liftachse gesteuert werden kann. Die eingesetzten Druckverhältnisventile zwischen den Luftfederbälgen der angetriebenen Achse und den Luftfederbälgen der Liftachse weisen ein festes Druckverhältnis auf und sind nicht regel- oder steuerbar.

Die EP0378202A2 beschreibt ein Aufhängungssteuersystem für ein Fahrzeug mit einem Fahrzeugaufbau und einer Anzahl von Straßenrädern, mit
- einem Aufhängungssystem, das zwischen dem Fahrzeugaufbau und jedem der Straßenräder angeordnet ist;
- einer ersten Einrichtung in Verbindung mit dem Aufhängungssystem zur Einstellung der Last, die auf jedes der Straßenräder ausgeübt wird;
- einer zweiten Einrichtung zur Überwachung vorgegebener Aufhängungssteuerparameter zur Bildung eines ersten Satzes von Parameterdaten;
- einer dritten Einrichtung zur Überwachung des Zustands des Radschlupfes an einer Anzahl der Straßenräder zur Bildung eines zweiten Satzes von Parameterdaten und
- einer vierten Einrichtung zur Aufnahme des ersten und zweiten Satzes der Parameterdaten zur Steuerung des Betriebs der ersten Einrichtung und zur Ableitung eines für den Radschlupf repräsentativen Wertes für jedes der Straßenräder auf der Grundlage des zweiten Satzes der Parameterdaten, wobei wenn der größte für den Radschlupf repräsentative Wert einer Anzahl von für den Radschlupf repräsentativen Werten kleiner oder gleich einem vorgegebenen Radschlupf-Schwellenwert ist, eine normale Aufhängungssteuerung auf der Grundlage des ersten Satzes der Parameterdaten durch die vierte Einrichtung durchgeführt wird, und wenn der maximale, für den Radschlupf repräsentative Wert größer als der Schwellenwert ist, die vierte Einrichtung die erste Einrichtung derart steuert, dass die Radlast, die auf das Rad mit dem größten Radschlupf ausgeübt wird, um einen Wert erhöht wird, der ausreichend ist zur Reduzierung des Radschlupfes derart, dass der Radschlupf kleiner oder gleich dem Radschlupf-Schwellenwert ist.

Der Erfindung liegt die Aufgabe zugrunde, ein Verfahren zu schaffen, durch welches die Traktion eines so betriebenen Fahrzeuges wesentlich verbessert werden kann. Insbesondere sollen die in der Praxis besonders schwierigen Anfahrsituationen für den Fahrzeugführer vereinfacht werden.

Diese Aufgabe wird erfindungsgemäß mit einem Verfahren gemäß den Merkmalen des Anspruchs 1 gelöst. Die weitere Ausgestaltung der Erfindung ist den Unteransprüchen zu entnehmen.

Erfindungsgemäß ist also ein Verfahren zur Steuerung des Druckausgleichs bei einem Fahrwerk mit einer Antriebsachse und zumindest einer Schleppachse ohne Antriebsfunktion vorgesehen, wobei den Achsen jeweils eine Druckkammer auf der linken und rechten Fahrzeugseite zugeordnet ist, über die der Druck bzw. die Last auf der jeweiligen Achse gesteuert wird, bei dem in Abhängigkeit erfasster Signale einer Antriebsschlupfregelung das Druckverhältnis der Druckkammern zwischen der Antriebsachse und zumindest einer Schleppachse zur Veränderung der Lastverteilung für beide Fahrzeugseiten unabhängig eingestellt wird. Durch das erfindungsgemäße Verfahren wird die Druckverteilung in den in der Praxis als Balgfedern ausgeführten Druckkammern der Antriebsachse sowie der nicht angetriebenen Schleppachse so geregelt, dass in Abhängigkeit der Signale eine seitenweise Traktionsregelung zwischen der Antriebsachse und der zumindest einen Schleppachse durchgeführt werden kann. Die Signale umfassen insbesondere die Raddrehzahl der Räder der Antriebsachse oder eine Regelinformation, aus welcher der Schlupf aller Räder der Antriebsachse und der Schleppachse abgeleitet wird. Aufgrund der erfassten Signale des Fahrzustandes wird seitenweise eine zeitlich begrenzte, vorübergehende Lastverlagerung auf die Antriebsachse vorgenommen. Dieses Verfahren ermöglicht eine wesentlich verbesserte Traktion, vor allem auch bei sogenannten µ-Split-Verhältnissen, bei welchen für die beiden Fahrzeugseiten unterschiedlich hohe Reibwerte zwischen den Rädern und der Fahrbahn vorliegen. Dabei ist ein individuelles Druckverhältnis einstellbar, mit dem Ziel, die Last auf die Antriebsachse für beide Fahrzeugseiten unabhängig zur Verbesserung der Traktion zu erhöhen.

Selbstverständlich könnte eine geänderte Lastverteilung auch allein durch eine Entlastung der Schleppachse erreicht werden. Hingegen ist es besonders Erfolg versprechend, wenn aufgrund erfasster Signale des Last- oder Fahrzustandes die auf die Antriebsachse wirkende Last auf zumindest einer Fahrzeugseite erhöht wird, um so eine unerwünschte Absenkung der Schleppachse unter ein vorbestimmtes Niveau zu vermeiden. Vielmehr wird das Niveau kurzzeitig zur Verbesserung der Traktion angehoben, womit in vorteilhafter Weise auch eine Erhöhung der Bodenfreiheit einhergeht.

Gemäß einer besonders vorteilhaften Ausgestaltung des erfindungsgemäßen Verfahrens wird der Druck in jeder Druckkammer mittels eines der jeweiligen Druckkammer zugeordneten Drucksensors einzeln erfasst und unabhängig eingestellt. Hierdurch wird eine weitere Verbesserung der Traktion erreicht, indem eine individuelle Einstellung realisierbar ist. Darüber hinaus kann der erfasste Druck in der Druckkammer sowohl als Stellglied als auch als ein Indikator für den Lastzustand genutzt werden. Ferner kann durch eine geeignete Ventilschaltung der Druck mehrerer Druckkammern mittels eines gemeinsamen Drucksensors erfasst werden.

Eine weitere, ebenfalls besonders Erfolg versprechende Abwandlung wird auch dann erreicht, wenn die Einstellung des jeweiligen Druckverhältnisses zwischen der Antriebsachse und der Schleppachse auf beiden Fahrzeugseiten gleichzeitig erfolgt. Hierdurch werden instabile Fahrzustände zuverlässig ausgeschlossen, indem die für die jeweilige Fahrsituation optimale Lastverteilung für die beiden Fahrzeugseiten in einem gemeinsamen Verfahrensschritt eingestellt werden. Insbesondere bei einer µ-Split-Anfahrsituation kann so ein Durchdrehen der angetriebenen Räder zuverlässig vermieden werden.

Besonders praxisnah ist eine Ausgestaltung des Verfahrens, bei der als Signal der Druck in den jeweiligen Druckkammern erfasst wird. Hierdurch können in vorteilhafter Weise die an sich bereits verfügbaren Regelinformationen vorhandener Systeme genutzt und bei der Regelung der Druckverteilung entsprechend berücksichtigt werden. Vorzugsweise eignen sich hierzu Regelinformationen einer Antriebsschlupfregelung (ASR) oder einer Traktionsregelung (ATC Automatic Traction Control).

Weiterhin kann eine einstellbare Neigung in vorteilhafter Weise auch genutzt werden, wenn in Abhängigkeit erfasster Signale des Fahrzustandes eine Neigung des Fahrzeuges entgegen auftretender Fliehkräfte eingestellt wird. Durch eine derartige Neigetechnik wird eine schnellere Durchfahrt von Kurven oder eine Verbesserung des Komforts als vermindert empfundene Seitenbeschleunigung erreicht.

Bei einer anderen, ebenfalls besonders vorteilhaften Weiterbildung des erfindungsgemäßen Verfahrens wird durch das Druckverhältnis eine gewünschte Neigung oder Niveauänderung des Fahrgestells zwischen der Antriebsachse und zumindest einer Schleppachse eingestellt. Hierdurch gelingt es, beispielsweise für Zwecke der Entladung, eine gewünschte Neigung des Aufbaus vorübergehend, insbesondere im Stillstand des Fahrzeuges, einzustellen. Dabei kann die Neigung in Bezug auf die beiden Fahrzeugseiten und/oder zwischen der Antriebsachse und der zumindest einen Schleppachse eingestellt werden, sodass sich eine Neigung zwischen vorn und hinten, eine Neigung zwischen der linken und der rechten Fahrzeugseite oder eine Überlagerung beider Neigungsebenen einstellen lässt. Eine solche Neigung kann beispielsweise bei Fahrzeugen zum Personentransport des öffentlichen Personennahverkehrs den Fahrgästen das Ein- und Aussteigen durch das sogenannte "Kneeling", das Absenken des Fahrzeugs auf der Einstiegsseite, bis das Fahrzeugniveau auf dieser Fahrzeugseite ein eingestelltes Minimum erreicht, erleichtern. Bei Nutzfahrzeugen kann durch eine derartige Neigung der Lastzustand kurzzeitig erhöht werden, um so die Traktion entsprechend zu beeinflussen.

Weiterhin ist es zur Vermeidung einer erhöhten Verschleißneigung von Vorteil, wenn die Lasterhöhung bis zum Erreichen einer maximalen Geschwindigkeit von 30 km/h oder auf einen Zeitraum von wenigen Minuten, beispielsweise maximal 15 Minuten, beschränkt ist, um so nach Erreichen gewöhnlicher Fahrbedingungen eine Entlastung der Antriebsräder einzustellen und zu einer für den Fahrbetrieb bei geringem Schlupf optimierten Lastverteilung zurückzukehren.

Dabei zeigt es sich, dass gemäß einer besonders zweckmäßigen Abwandlung die Lasterhöhung bei einer Änderung der Signale für eine bestimmte Zeit gehalten wird. In dieser auch als "Delay" bezeichneten Phase nach dem Fortfall des erhöhten Traktionsbedarfs wird die eingestellte Lastverteilung zunächst noch konstant gehalten und dann beispielsweise stetig auf die Standardlastverteilung zurückgeführt.

Selbstverständlich ist das Verfahren nicht auf die Kombination einer Antriebsachse mit einer einzigen Schleppachse beschränkt. Vielmehr können auch mehrere Antriebsachsen und/oder Schleppachsen, von denen eine oder mehrere als Liftachsen ausgeführt sein können, nach dem erfindungsgemäßen Verfahren gesteuert werden. Dabei kann gemäß einer Abwandlung auch das Druckverhältnis der Druckkammern zwischen verschiedenen Schleppachsen, insbesondere für beide Fahrzeugseiten, unabhängig eingestellt werden.

Ferner kann das Verfahren in Erfolg versprechender Weise ebenso für Straßenfahrzeuge, insbesondere Nutzfahrzeuge, wie auch für Schienenfahrzeuge eingesetzt werden.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: eine Prinzipdarstellung eines zur Anwendung des Verfahrens bestimmten Fahrzeuges;
- Fig. 2a: ein Diagramm eines zeitlichen Verlaufs eines Schlupfsignals;
- Fig. 2b: ein Diagramm eines zeitlichen Verlaufs der an der Schleppachse eingestellten Last;
- Fig. 2c: ein Diagramm eines zeitlichen Verlaufs der an der Antriebsachse eingestellten Last;
- Fig. 3: eine Prinzipdarstellung einer Neigung des Fahrwerks der Antriebsachse gegenüber der Schleppachse;
- Fig. 4: eine Prinzipdarstellung einer Neigung des Fahrwerks der linken Fahrzeugseite gegenüber der rechten Fahrzeugseite.

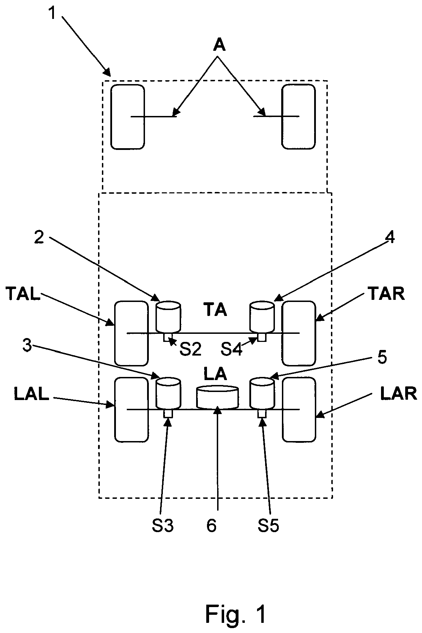

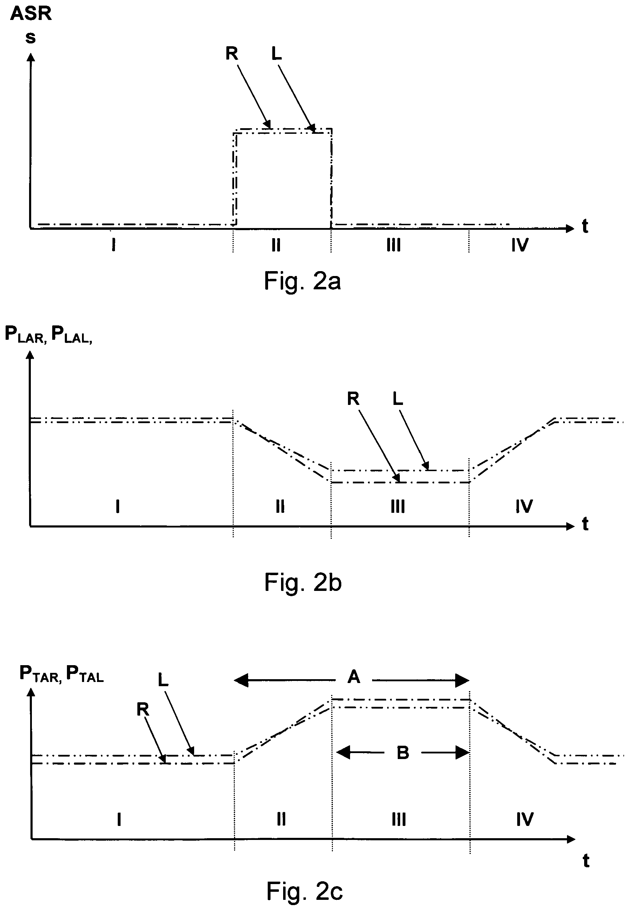

Figur 1 zeigt in einer Draufsicht eine Prinzipdarstellung eines zur Anwendung des Verfahrens bestimmten Fahrwerks 1 eines nicht weiter dargestellten Kraftfahrzeugs mit einer gelenkten Vorderachse A sowie einer Antriebsachse TA und einer mittels eines Liftbalgs 6 anhebbaren, als Liftachse ausgeführten, antriebslosen Schleppachse LA. In Abhängigkeit von sensorisch erfassten, fahrzustandsabhängigen Signalen erfolgt eine seitenweise Traktionsregelung auf der Basis einer Regelinformation, aus welcher der Schlupf des linken Rades TAL und des rechten Rades TAR der Antriebsachse TA sowie des linken Rades LAL und des rechten Rades LAR der Schleppachse LA abgeleitet wird. Aufgrund dieser Signale des Fahrzustands wird die Fahrzeugseite derjenigen Räder TAL, TAR, LAL, LAR, die einen erhöhten, in Figur 2a dargestellten Schlupf s aufweisen, vorübergehend mit einer erhöhten Last beaufschlagt. Hierzu erfolgt eine Lastverlagerung von der Schleppachse LA auf die Antriebsachse TA. Zu diesem Zwecke wird also der Druck in den in Figur 1 dargestellten Druckkammern 3 und 5 abgesenkt und der Druck in den Druckkammern 2 und 4 erhöht. Jeder der Druckkammern 2, 3, 4 und 5 ist zur Erfassung und Überwachung des jeweiligen Drucks ein separater Drucksensor S2, S3, S4 und S5 zugeordnet. Falls durch die Beschaffenheit des Untergrunds ein solch erhöhter Schlupf lediglich für eine Fahrzeugseite, beispielsweise an den Rädern TAR und LAR der rechten Fahrzeugseite, erfasst wird, kann die Lastverlagerung auch auf eine Fahrzeugseite beschränkt werden oder auf dieser Fahrzeugseite abweichend von der anderen Fahrzeugseite erfolgen. Hierzu wird beispielsweise der Druck der auf der linken Fahrzeugseite angeordneten Druckkammer 2 der Antriebsachse TA und der Druckkammer 3 der Schleppachse LA erhöht oder der Druck der auf der rechten Fahrzeugseite angeordneten Druckkammer 4 der Antriebsachse TA und der Druckkammer 5 der Schleppachse LA vermindert. Hierdurch wird eine wesentlich verbesserte Traktion, vor allem auch bei sogenannten µ-Split-Verhältnissen, erreicht. Die erste Druckkammer 2, die zweite Druckkammer 3, die dritte Druckkammer 4 und die vierte Druckkammer 5 sowie der Liftbalg 6 können als höhenveränderbare Luftfedern, insbesondere als Rollbalgluftfedern und/oder Faltenbalg-Luftfedern, ausgeführt sein.

Ergänzend wird das erfindungsgemäße Verfahren noch anhand der Figuren 2a bis 2c dargestellt, welche jeweils einen korrespondierenden zeitlichen Verlauf gesondert für die rechte Fahrzeugseite R sowie die linke Fahrzeugseite L darstellen. In Figur 2a ist zunächst der Verlauf eines den Schlupf s der in Figur 1 gezeigten Räder TAL, TAR der Antriebsachse TA wiedergebenden Signals ASR dargestellt. Erkennbar zeigt das Diagramm einen vernachlässigbaren Schlupf s im Verlauf des ersten Zeitabschnitts I, des dritten Zeitabschnitts III, und des vierten Zeitabschnitts IV, der lediglich von einem sprunghaft erhöhten, auf den zweiten Zeitabschnitt II beschränkten Schlupf unterbrochen ist.

Der Druck P_{LAL} in der in Figur 1 gezeigten, auf der linken Fahrzeugseite angeordneten Druckkammer 2 der Antriebsachse TA und der Druckkammer 3 der Schleppachse LA sowie der Druck P_{LAR} in der auf der rechten Fahrzeugseite angeordneten Druckkammer 4 der Antriebsachse TA und der Druckkammer 5 der Schleppachse LA in dem zweiten Zeitabschnitt II, wie aus den Figuren 2b und 2c ersichtlich, werden von der Fahrzeugseite unabhängig, ausgehend von einem Standardwert in dem ersten Zeitabschnitt I und in dem vierten Zeitabschnitt IV aufgrund des erfassten erhöhten Schlupfes in dem zweiten Zeitabschnitt II für die Schleppachse LA reduziert und zugleich werden der Druck P_{TAL} auf der linken Fahrzeugseite der Antriebsachse TA sowie der Druck P_{TAR} auf der rechten Fahrzeugseite der Antriebsachse TA seitenunabhängig erhöht. Der jeweils am Ende des zweiten Zeitabschnitts II erreichte Druck P_{LAL}, P_{LAR}, P_{TAL} P_{TAR} wird im nachfolgenden dritten Zeitabschnitt III unabhängig des bereits vernachlässigbaren Schlupfes in diesem dritten Zeitabschnitt III zunächst noch für eine Dauer B konstant gehalten, um so eine Stabilisierung der Kraftübertragung herbeizuführen. Die Zeitabschnitte II, III und IV definieren so einen Lasterhöhungszeitraum A.

Die in den Figuren 2a bis 2b dargestellten Abweichungen der jeweiligen Diagrammverläufe der linken gegenüber der rechten Fahrzeugseite L, R sind lediglich beispielhaft. Selbstverständlich können diese in der Praxis auch wesentlich stärker differieren. Weiterhin können der erste Zeitabschnitt I, der zweite Zeitabschnitt II, der dritte Zeitabschnitt III oder der vierte Zeitabschnitt IV für die Fahrzeugseiten L, R unterschiedlich bemessen sein. Ferner können umgekehrt die jeweiligen Verläufe der linken Fahrzeugseite L und der rechten Fahrzeugseite R übereinstimmen.

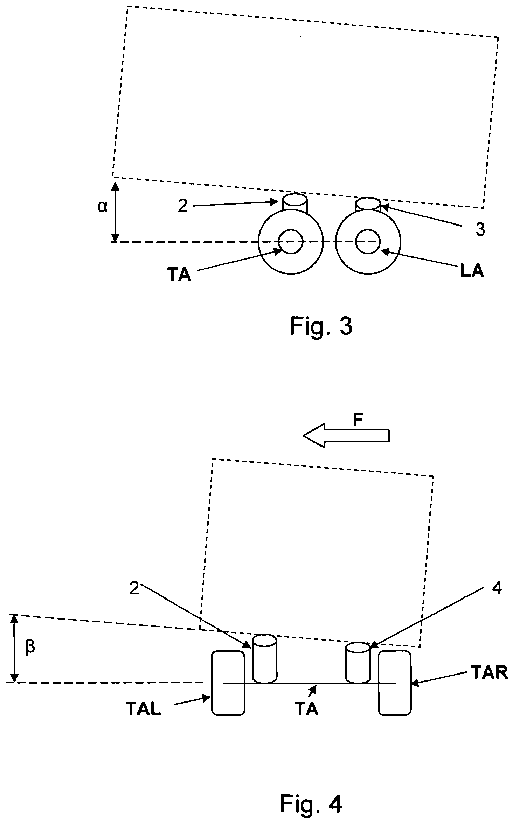

In Figur 3 ist ergänzend noch eine Neigung des Fahrwerks der Antriebsachse TA gegenüber der Schleppachse LA mit einem Winkel α dargestellt, wobei die Neigung zum besseren Verständnis übertrieben dargestellt ist. Der Winkel α beschreibt in Fahrzeuglängsrichtung die Neigung der Fahrzeugkarosserie, beispielsweise des Bodens der Ladefläche, zu einer virtuellen Ebene, welche durch die Antriebsachse TA und die Schleppachse LA gebildet wird, oder vereinfacht ausgedrückt wird durch den Winkel α die Neigung der Fahrzeugkarosserie in Fahrzeuglängsrichtung zur nicht gezeigten Fahrbahnoberfläche beschrieben. Zur Einstellung der Neigung wird der Druck in der Druckkammer 2 der Antriebsachse TA erhöht und der Druck in der Druckkammer 3 der Schleppachse LA abgesenkt.

Außerdem ist in Figur 4 noch eine Neigung des Fahrwerks der linken Fahrzeugseite gegenüber der rechten Fahrzeugseite entgegen der im Fahrbetrieb auftretenden Fliehkräfte F mit einem ebenfalls zeichnerisch übertriebenem Winkel β dargestellt. Der Winkel β beschreibt in Fahrzeugquerrichtung die seitliche Neigung der Fahrzeugkarosserie, beispielsweise des Bodens der Ladefläche, zu einer virtuellen Ebene, welche durch die Antriebsachse TA und die Schleppachse LA gebildet wird, oder vereinfacht ausgedrückt wird durch den Winkel β die seitliche Neigung der Fahrzeugkarosserie zur nicht gezeigten Fahrbahnoberfläche beschrieben. Wie zu erkennen wird hierzu die Druckkammer 2 des linken Rades TAL der Antriebsachse TA mit einem höheren Druck beaufschlag als die Druckkammer 4 des rechten Rades TAR der Antriebsachse TA.

## Patentansprüche

1. Verfahren zur Steuerung des Druckausgleichs bei einem Fahrwerk (1) mit einer Antriebsachse (TA) und zumindest einer Schleppachse (LA) ohne Antriebsfunktion, wobei den Achsen (TA, LA) jeweils eine Druckkammer (2, 3, 4, 5) auf der linken Fahrzeugseite (L) und der rechten Fahrzeugseite (R) zugeordnet ist, über die der Druck (P_{LAL}, P_{LAR}, P_{TAL}, P_{TAR}) auf die jeweilige Antriebsachse (TA) und die Schleppachse (LA) gesteuert wird, **dadurch gekennzeichnet, dass** in Abhängigkeit erfasster Signale (ASR) einer Antriebsschlupfregelung das Druckverhältnis der Druckkammer (2) der Antriebsachse (TA) und der Druckkammer (3) der Schleppachse (LA) auf der linken Fahrzeugseite (L) unabhängig von dem Druckverhältnis der Druckkammer (4) der Antriebsachse (TA) und der Druckkammer (5) der Schleppachse (LA) auf der rechten Fahrzeugseite (R) eingestellt wird.

2. Verfahren nach Anspruch 1, **dadurch gekennzeichnet, dass** aufgrund erfasster Signale (ASR) des Last- und/oder Fahrzustands die auf die Antriebsachse (TA) wirkende Last auf zumindest einer Fahrzeugseite (L, R) erhöht wird.

3. Verfahren nach Anspruch 1 oder 2, **dadurch gekennzeichnet, dass** der Druck (P_{LAL}, P_{LAR}, P_{TAL}, P_{TAR}) jeder Druckkammer (2, 3, 4, 5) mittels eines der jeweiligen Druckkammer (2, 3, 4, 5) zugeordneten Drucksensors (S2, S3, S4, S5) einzeln erfasst und unabhängig eingestellt wird.

4. Verfahren nach zumindest einem der vorhergehenden Ansprüche, **dadurch gekennzeichnet, dass** die Einstellung des jeweiligen Druckverhältnisses der Druckkammern (2, 3) zwischen der Antriebsachse (TA) und der Schleppachse (LA) auf der linken Fahrzeugseite (L) und die Einstellung des jeweiligen Druckverhältnisses der Druckkammern (4, 5) zwischen der Antriebsachse (TA) und der Schleppachse (LA) auf der rechten Fahrzeugseite (R) gleichzeitig erfolgt.

5. Verfahren nach zumindest einem der vorhergehenden Ansprüche, **dadurch gekennzeichnet, dass** als Signal (ASR) der Druck (P_{LAL}, P_{LAR}, P_{TAL}, P_{TAR}) zumindest einer der Druckkammern (2, 3, 4, 5) erfasst wird.

6. Verfahren nach Anspruch 2, **dadurch gekennzeichnet, dass** in Abhängigkeit erfasster Signale (ASR) des Fahrzustands eine Neigung (Winkel β) des Fahrwerks (1) entgegen auftretender Fliehkräfte (F) eingestellt wird.

7. Verfahren nach Anspruch 4, **dadurch gekennzeichnet, dass** durch das Druckverhältnis eine gewünschte Neigung (Winkel α) und/oder Niveauänderung des Fahrwerks (1) zwischen der Antriebsachse (TA) und zumindest einer Schleppachse (LA) eingestellt wird.

8. Verfahren nach Anspruch 2, **dadurch gekennzeichnet, dass** die Lasterhöhung zeitlich auf einen vorbestimmten Lasterhöhungszeitraum (A) von wenigen Minuten, insbesondere von maximal 15 Minuten, und/oder auf eine maximale Geschwindigkeit, insbesondere 30 km/h, beschränkt wird.

9. Verfahren nach Anspruch 4, **dadurch gekennzeichnet, dass** das geänderte Druckverhältnis der Druckkammern (2, 3, 4, 5) bei einer Änderung der Signale (ASR) für eine bestimmte Dauer (B) des dritten Zeitabschnitts (III) beibehalten wird.

## Claims

1. Process for controlling the pressure compensation in a chassis (1) having a drive axle (TA) and at least one trailing axle (LA) without a drive function, wherein the axles (TA, LA) are each assigned a pressure chamber (2, 3, 4, 5) on the left side of the vehicle (L) and on the right side of the vehicle (R), by means of which the pressure (P_{LAL}, P_{LAR}, P_{TAL}, P_{TAR}) on the respective drive axle (TA) and trailing axle (LA) is controlled, **characterized in that** depending on detected signals (ASR) of an acceleration, slip regulation, the pressure ratio of the pressure chamber (2) of the drive axle (TA) and the pressure chamber (3) of the trailing axle (LA) on the left side of the vehicle (L) is set independently of the pressure ratio of the pressure chamber (4) of the drive axle (TA) and the pressure chamber (5) of the trailing axle (LA) on the right side of the vehicle (R).

2. Process according to Claim 1, **characterized in that** based on the signals (ASR) detected for the load and/or driving condition, the load acting on the drive axle (TA) is increased on at least one side of the vehicle (L, R).

3. Process according to Claim 1 or 2, **characterized in that** the pressure (P_{LAL}, P_{LAR}, P_{TAL}, P_{TAR}) in each pressure chamber (2, 3, 4, 5) is individually detected and independently adjusted by means of a pressure sensor (S2, S3, S4, S5) assigned to the respective pressure chamber (2, 3, 4, 5).

4. Process according to at least one of the preceding claims, **characterized in that** the adjustment of the respective pressure ratio of the pressure chambers (2, 3) between the drive axle (TA) and the trailing axle (LA) on the left side of the vehicle (L) and the adjustment of the respective pressure ratio of the pressure chambers (4, 5) between the drive axle (TA) and the trailing axle (LA) on the right side of the vehicle (R) occurs simultaneously.

5. Process according to at least one of the preceding claims, **characterized in that** the pressure (P_{LAL}, P_{LAR}, P_{TAL}, P_{TAR}) in at least one of the pressure chambers (2, 3, 4, 5) is detected as the signal (ASR).

6. Process according to Claim 2, **characterized in that** depending on the signals (ASR) detected for the driving condition, an inclination (angle β) of the chassis (1) is set against emerging centrifugal forces (F).

7. Process according to Claim 4, **characterized in that** a desired inclination (angle α) and/or level change in the chassis (1) between the drive axle (TA) and at least one trailing axle (LA) is set.

8. Process according to Claim 2, **characterized in that** the load increase is limited in time to a predetermined load increase period (A) of a few minutes, particularly of a maximum of 15 minutes, and/or to a maximum speed, particularly of 30 km/hr.

9. Process according to Claim 4, **characterized in that** the altered pressure ratio of the pressure chambers (2, 3, 4, 5) is retained for a given duration (B) of the third time period (III) when the signals (ASR) change.

## Revendications

1. Procédé de commande de l'équilibrage de pression pour un véhicule utilitaire (1) comportant un essieu moteur (TA) et au moins un essieu traîné (LA) sans fonction motrice, dans lequel une chambre de pression (2, 3, 4, 5) est respectivement associée aux essieux (TA, LA) sur le côté gauche (L) et le côté droit (R) du véhicule, chambre par l'intermédiaire de laquelle la pression (P_{LAL}, P_{LAR}, P_{TAL}, P_{TAR}) sur l'essieu moteur (TA) respectif et sur l'essieu traîné (LA) est commandée, **caractérisé en ce que** le rapport de pression de la chambre de pression (2) de l'essieu moteur (TA) et de la chambre de pression (3) de l'essieu traîné (LA) sur le côté gauche (L) du véhicule est réglé indépendamment du rapport de pression de la chambre de pression (4) de l'essieu moteur (TA) et de la chambre de pression (5) de l'essieu traîné (LA) sur le côté droit (R) du véhicule en fonction de signaux (ASR) détectés d'un système de régulation du glissement de traction.

2. Procédé selon la revendication 1, **caractérisé en ce que** la charge agissant sur l'essieu moteur (TA) est augmentée sur au moins un côté (L, R) du véhicule sur la base de signaux détectés (ASR) de l'état de charge et/ou de déplacement.

3. Procédé selon la revendication 1 ou 2, **caractérisé en ce que** la pression (P_{LAL}, P_{LAR}, P_{TAL}, P_{TAR}) de chaque chambre de pression (2, 3, 4, 5) est détectée individuellement au moyen d'un capteur de pression (S2, S3, S4, S5) associé à la chambre de pression (2, 3, 4, 5) respective.

4. Procédé selon au moins l'une des revendications précédentes, **caractérisé en ce que** le réglage du rapport de pression respectif des chambres de pression (2, 3) entre l'essieu moteur (TA) et l'essieu traîné (LA) sur le côté gauche (L) du véhicule et le réglage du rapport de pression respectif de la chambre de pression (4, 5) entre l'essieu moteur (TA) et l'essieu entraîné (LA) sur le côté droit (R) du véhicule sont effectués simultanément.

5. Procédé selon au moins l'une des revendications précédentes, **caractérisé en ce que** la pression (P_{LAL}, P_{LAR}, P_{TAL}, P_{TAR}) d'au moins l'une des chambres de pression (2, 3, 4, 5) est détectée en tant que signal (ASR).

6. Procédé selon la revendication 2, **caractérisé en ce qu'**une inclinaison (angle β) du véhicule utilitaire (1) est réglée de manière opposée à une force centrifuge (F) pouvant apparaître en fonction de signaux (ASR) détectés de l'état de déplacement.

7. Procédé selon la revendication 4, **caractérisé en ce qu'**une inclinaison (angle α) et/ou une variation de niveau souhaitée(s) du véhicule utilitaire (1) entre l'essieu moteur (TA) et au moins un essieu traîné (LA) est/sont réglée(s) au moyen du rapport de pression.

8. Procédé selon la revendication 2, **caractérisé en ce que** l'augmentation de charge est limitée dans le temps à un intervalle de temps prédéterminé d'augmentation de charge (A) de quelques minutes, en particulier au maximum de 15 minutes, et/ou à une vitesse maximale, en particulier de 30 km/h.

9. Procédé selon la revendication 4, **caractérisé en ce que** le rapport de pression des chambres de pression (2, 3, 4, 5) est maintenu inchangé lors d'une variation des signaux (ASR) pendant une durée déterminée (B) de la troisième période de temps (III).
